(19) Europäisches Patentamt
European Patent Office
Office européen des brevets

(11) **EP 2 957 405 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(51) Int Cl.:
*B29B 11/16* (2006.01)          *B29C 70/20* (2006.01)
*B29C 70/54* (2006.01)          *B29C 70/56* (2006.01)
*B29C 70/38* (2006.01)

(21) Anmeldenummer: **15175793.7**

(22) Anmeldetag: **27.01.2012**

(54) **VORRICHTUNG UND VERFAHREN ZUR HERSTELLUNG VON FASERVORFORMLINGEN, DIE INSBESONDERE EINE VORSTUFE BEI DER HERSTELLUNG VON FASERVERSTÄRKTEN KUNSTSTOFF-BAUTEILEN DARSTELLEN**

DEVICE AND METHOD FOR MAKING FIBROUS PREFORMS, ESPECIALLY A PRECURSOR FOR THE PRODUCTION OF FIBRE REINFORCED PLASTIC COMPONENTS

DISPOSITIF ET PROCEDE DE FABRICATION DE PREFORMES EN FIBRES, PRESENTANT NOTAMMENT UNE EBAUCHE LORS DE LA FABRICATION DE COMPOSANTS EN MATIERE SYNTHETIQUE RENFORCEE DE FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011 DE 102011007018**

(43) Veröffentlichungstag der Anmeldung:
**23.12.2015 Patentblatt 2015/52**

(62) Dokumentnummer(n) der früheren Anmeldung(en) nach Art. 76 EPÜ:
**12701889.3 / 2 694 263**

(73) Patentinhaber: **Voith Patent GmbH**
**89522 Heidenheim (DE)**

(72) Erfinder:
• **GÖTTINGER, Marco**
**85614 Kirchseeon (DE)**
• **KAISER, Michael**
**85614 Kirchseeon (DE)**

(56) Entgegenhaltungen:
**DE-A1-102009 042 384**

**Beschreibung**

Die Erfindung betrifft eine Vorrichtung zur Herstellung von Faservorformlingen, die insbesondere eine Vorstufe bei der Herstellung von faserverstärkten Kunststoff-Bauteilen darstellen, wobei die Vorrichtung mehrere Abwickelstationen für die Bereitstellung mehrerer Garne oder Rovings und mehrere Greifer, die jeweils einzelne oder mehrere Garne oder Rovings an ihrem Anfang greifen können, aufweist, wobei jeder Greifer auf einem Pfad zwischen einer Maximalposition und einer Abholposition hin und her bewegbar ist, und wobei die Abholposition an einer Garnübergabestelle vorgesehen ist und näher an der Abwickelstation ist als die Maximalposition.

Weiterhin betrifft die Erfindung ein Verfahren unter Verwendung der Vorrichtung, zur Herstellung von Faservorformlingen, die beispielsweise eine Vorstufe bei der Herstellung von faserverstärkten Kunststoff-Bauteilen darstellen, wobei das Verfahren folgende Verfahrensschritte aufweist:

- Spannen von Garnen oder Rovings
- Drapieren der Garne oder Rovings über ein Formwerkzeug
- Fixieren der drapierten Garne oder Rovings zu einem Faservorformling.

Faserverstärkter Kunststoff besteht aus Matrixmaterial, das u.a. die Steifigkeit ergibt und aus Fasern, die in das Matrixmaterial eingebettet sind und die u.a. die Zugfestigkeit liefern. Faserverstärkter Kunststoff wird besonders für hochbelastetete Bauteile verwendet, die trotzdem noch möglichst leicht sein sollen. Da die Fasern in Querrichtung keine Festigkeit vermitteln, müssen die Fasern so ausgerichtet sein, dass ihre Längsrichtung mit der jeweiligen Belastungsrichtung möglichst gut übereinstimmt. Um das zu erreichen, müssen die Fasern oft in verschiedene Richtungen gelegt werden. Je besser und genauer die Faserlage an die Belastung angepasst ist, umso besser wird das Bauteil sein. Für Bauteile aus faserverstärktem Kunststoff gibt es zahlreiche Herstellverfahren. Für die Produktion von großen Stückzahlen gut anwendbare Verfahren gibt es derzeit allerdings nur bei rotationssymmetrischen oder platten- bzw. strangförmigen Bauteilen durch Wickeln oder Platten- bzw. Strangpressen.

Komplexere hochwertige 3-D-Strukturen lassen sich dagegen nur sehr aufwändig herstellen, da das Herstellen der benötigten Faservorformlinge schwierig, langsam und teuer ist. Hochwertige Strukturen werden meist mit Endlosfasern hergestellt. Bei vielen Verfahren werden zunächst Faservorformlinge entsprechend der gewünschten dreidimensionalen Bauteilform, sogenannte Preforms hergestellt, die überwiegend aus Fasern bestehen, welche oft in mehreren Lagen übereinander angeordnet sind, um die notwendigen Faserrichtungen zu erzielen. Anschließend werden die Faservorformlinge dann mit dem Matrixmaterial getränkt oder bestrichen, manchmal noch gepresst und zuletzt ausgehärtet. Sowohl für das Herstellen der Faservorformlinge als auch für das Tränken und/oder Aushärten der Bauteile können Formwerkzeuge entsprechend der gewünschten Bauteilform benutzt werden, auf oder in die der Faservorformling oder das Bauteil gelegt und/oder gepresst wird.

Damit die Faservorformlinge eine ausreichende Formstabilität für die Weiterverarbeitung aufweisen, werden sie mit kleinen Mengen Kleber oder Binder versehen und nach dem dreidimensionalen Drapieren fixiert, z.B. durch Trocknung oder durch Erhitzen und Abkühlen.

Die Faservorformlinge werden meist durch Übereinanderlegen und Fixieren von vorgefertigten und vorverbundenen flächigen Halbzeugen erstellt. Solche Halbzeuge sind etwa Tapes oder Gewebe, Gelege oder Vliese, bei denen eine Vielzahl von einzelnen Garnen oder Rovings bereits zu einem flächigen Gebilde verwebt, vernäht oder verklebt sind. Von einem Garn spricht man bei Verwendung sogenannter Endlosfasern, d.h. wenn die Fasern von einer Spule oder aus einem Knäuel abgewickelt werden. Zahlreiche Garne, die unverdreht gleichzeitig von einer Spule oder aus einem Knäuel abgewickelt werden, nennt man Garnbündel oder Roving. Dabei können die Rovings aus bis zu mehreren Zehntausend Einzelgarnen, die auch Filamente genannt werden, bestehen.

Die benötigten Einzelteile werden aus dem flächigen Halbzeug, welches meist als Rollenware zur Verfügung steht, nach einer Art Schnittmuster zugeschnitten, wie es auch aus DE 10 2008 011 658 A1 bekannt ist. Dann werden sie über ein Formwerkzeug gelegt und miteinander verbunden oder verpresst. Ein Beispiel für die Herstellung solcher Halbzeuge durch Verkleben oder Vernähen zeigt ebenfalls DE 10 2008 011 658 A1. Häufig ist trotz allem ein hoher Anteil manueller Tätigkeiten notwendig. Eine Vorrichtung zur maschinellen Herstellung von einfachen eindimensional gekrümmten Vorformlingen mit Abschnitten aus Halbzeug, die in einer Kassette vorgehalten und dann auf einem Kern abgelegt werden, ist aus DE 10 2008 042 574 A1 bekannt. Komplexere Formen sind maschinell noch nicht herstellbar.

Eine andere Möglichkeit zur Herstellung von Faservorformlingen für komplexere Bauteile ist das automatisierte Faserlegen. Dabei werden schmale Garnbündel oder Bänder aus Garnbündeln von einem Faserlegekopf über dem Formwerkzeug hin und her geführt, und dabei nebeneinander und übereinander darauf abgelegt, angepresst und fixiert. Für komplexere Bauteile ist eine aufwändige roboterartige Steuerung des Faserlegekopfes notwendig. Auch bei Einsatz von zwei, drei oder sogar vier Faserlegeköpfen parallel ist die Fertigungsgeschwindigkeit noch relativ langsam, da die Köpfe oft lange Wege zurücklegen müssen und da sukzessive mit schmalen Faserbündeln gearbeitet wird. Des Weiteren haben sie eine sehr lange und komplizierte Garnnachführung vom Spulengatter zum mehrachsig bewegten Legekopf. Eine solche Garnnachführung in Schläuchen mit speziellen Führungsklingen, um ein Verdrehen der Rovings zu verhindern, ist beispielsweise in US 2008/0202691 A1 dargestellt.

Aus der DE 10 2009 042 384 ist eine Vorrichtung zum Aufbringen einer unidirektionalen Faserlage bekannt, bei der die einzelnen Faserrovings mittels Zuführeinrichtungen auf eine sich in einer Laufrichtung bewegende Unterlage abgelegt werden.

Die Aufgabe der Erfindung ist es, eine Vorrichtung und ein Verfahren zur Herstellung von Faservorformlingen zu schaffen, so dass auch komplexere, hochwertige Strukturen leichter automatisierbar, aber flexibel in der Form und Faserausrichtung, schneller und kostengünstiger gefertigt werden können.

Die Aufgabe wird durch die Vorrichtung mit den Merkmalen gemäß Anspruch 1 gelöst. Weitere vorteilhafte Merkmale sind in den abhängigen Ansprüchen genannt.

Erfindungsgemäß zeichnet sich die Vorrichtung dadurch aus, dass jeder Greifer eine eigene Maximalposition hat und einer eigenen Garnübergabestelle zugeordnet ist und dass die Greifer jeweils einzeln auf im Wesentlichen zueinander parallelen Pfaden bewegbar sind und dass ein Formwerkzeug in der Vorrichtung so gedreht werden kann, dass auf eine erste drapierte, bevorzugt auch fixierte, Lage aus Garnen oder Rovings eine weitere Lage aus Garnen oder Rovings aufgebracht werden kann und zwar mit einer anderen Faserrichtung, bevorzugt um etwa 30°, 45°, 60° oder 90° gedreht.

Dadurch ergeben sich einfachere Garnführungen und die Greifer können gleichzeitig arbeiten. Und in der Vorrichtung können mehrere Lagen von Fasermaterial auch mit unterschiedlicher Faserrichtung aufgebracht und zu einem hochwertigen an die spätere Belastung angepassten Faservorformling zusammengefügt werden. Beides führt zu einer deutlichen Steigerung der Ablegerate. Die Vorrichtung ist dadurch so ausgestaltet, dass sie für eine Ablegerate von mehr als 2 kg/min oder sogar mehr als 3 kg/min an Garn- oder Rovingmaterial geeignet ist. Es ist keine komplizierte robotergesteuerte Garn- oder Roving-Nachführung nötig, die geschwindigkeitsbegrenzend wäre. Zusätzlich ergibt sich dadurch eine stark verringerte Reibung bei der Garnnachführung. Eine gute Automatisierbarkeit ist gegeben und aufgrund der einzelnen Greifer ist die Vorrichtung flexibel für die Herstellung verschiedener Bauteile geeignet und schnell umsteuerbar. Da auf die sonst üblichen flächigen Halbzeuge verzichtet wird und statt dessen direkt aus Garnen oder Rovings der Faservorformling drapiert und hergestellt wird, sind die Materialkosten gegenüber bekannten Verfahren viel niedriger. Durch die Parallelisierung kann trotzdem eine kurze Herstellzeit erreicht werden. Die flächigen Halbzeuge sind aufgrund der Vorfertigung recht teuer. Bei stark dreidimensionalen Bauteilen besteht bei der Verwendung von großflächigen Halbzeugen zudem noch die Gefahr von Faltenbildung. Bei kleinflächigen steigt andererseits der Aufwand für das Zuschneiden und Verbinden der Einzelteile.

Die mehreren Abwickelstationen können beispielsweise als sogenanntes Spulengatter ausgeführt sein. Dabei können die Garne oder Rovings von Spulen oder aus Garnknäuels (Bobbins) gezogen werden. Jede Garnübergabestelle bekommt Garne oder Rovings von einer oder von mehreren Abwickelstationen. An der Spule oder an der Garnübergabestelle oder dazwischen kann eine Einrichtung zur Regelung oder Einstellung und/oder eine Einrichtung zur Messung der Garnspannung vorhanden sein.

An oder vor der Garnübergabestelle kann eine Spreizeinrichtung vorgesehen sein, die ein Zusammenlaufen der Garne verhindert und für eine flächige Abdeckung sorgt.

Weiterhin ist es vorteilhaft, wenn die Greifer verschiedene individuelle Zwischenpositionen auf ihrem Pfad einnehmen können und diese die jeweiligen Anfänge der Garne oder Rovings an diesen Zwischenpositionen festhalten können. Dadurch können unterschiedliche Formen nachgebildet werden. Und es wird von jedem Greifer nur soviel Garn aufgespannt, wie für die entsprechende Stelle der Form benötigt wird.

Die Vorrichtung kann außerdem so gestaltet sein, dass die Greifer jeweils auf einem im Wesentlichen linearen Pfad von der Abholposition zur Maximalposition bewegt werden können, was die apparative Umsetzung für die Greiferbewegung noch mehr vereinfacht.

Vorteilhafterweise weist die Vorrichtung wenigstens ein Formwerkzeug auf, das zwischen die Garnübergabestellen und zumindest einige der Greifer gebracht werden kann, insbesondere so, dass dadurch die Garne oder Rovings über ein Formwerkzeug drapiert werden. Die Garne oder Rovings spannen sich somit über das Formwerkzeug und bilden damit dessen Form ab. Bevorzugterweise ist ein weiteres Formwerkzeug vorhanden, das passend zum ersten Formwerkzeug ausgebildet ist und mit diesem so zusammengeführt werden kann, dass die Garne oder Rovings zwischen den Formwerkzeugen noch genauer in die gewünschte dreidimensionale Struktur geformt werden. Die Bewegungsrichtung des oder der Formwerkzeuge ist bevorzugt im Wesentlichen senkrecht zu den Pfaden der Greifer. Das oder die Formwerkzeuge können mit einer Presseinrichtung und oder einer Heizeinrichtung versehen sein, um etwa vorhandenes Bindermaterial zu aktivieren, so dass die einzelnen Garne oder Rovings miteinander zum Faservorformling verbunden werden. Ebenso können die Formwerkzeuge als auswechselbare oder einfach trennbare Teile an oder auf einer Bewegungseinrichtung wie zum Beispiel einem Hubtisch oder einer Absenkeinrichtung befestigt sein. Selbstverständlich können auch mehrteilige Formwerkzeuge vorgesehen sein.

Von Vorteil ist es, wenn die einzelnen Greifer einer Außenkontur eines Formwerkzeuges folgend auf ihrem Pfad positioniert werden können. Das heißt, dass die Greifer die Anfänge der Garne oder Rovings so festhalten, dass sie möglichst nahe an der Stelle sind, an der der Faservorformling seinen Rand haben wird, an dem die Garne nach dem Formen am Formwerkzeug getrennt werden. Die Greifer werden also dort positioniert, wo die jeweiligen Garne oder Rovings das Formwerkzeug verlassen, wenn es in die Position zum Formen bewegt wurde, oder bei mehrteiligen Formwerkzeugen, wenn die Formwerkzeuge zusammengefahren wurden. Dadurch entsteht auch bei komplexen Strukturen nur sehr wenig Verschnitt an teurem Fasermaterial, was besonders bei der Serienfertigung wichtig ist.

Um eine gute Nachbildung der gewünschten Bauteilstruktur zu ermöglichen und um flexibel anpassbar zu sein, ist es vorteilhaft, wenn die Greifer eine Klemmbreite von 10-500 mm, bevorzugt von 20 - 200 mm aufweisen. Insbesondere können die einzelnen Greifer auch eine unterschiedliche Breite aufweisen. Weiterhin können mindestens 5 Greifer, bevorzugt mindestens 10 Greifer, besonders bevorzugt mindestens 20 Greifer vorhanden sein. Alle Greifer zusammen können eine Gesamtklemmbreite von mindestens 1 m, bevorzugt von mindestens 2 m, besonders bevorzugt von mindestens 3 m aufweisen. Somit sind auch größere Faservorformlinge herzustellen.

Weiterhin können die Greifer an den Garnübergabestellen zusammen mit den Garnen oder Rovings auch Bindermaterial, insbesondere Fäden oder Vliese, die zumindest teilweise aus Thermoplast oder Klebstoff bestehen, greifen. Dadurch wird gleich mit dem Fasermaterial auch das zum Fixieren nötige Bindermaterial mit aufgebracht. Das Bindermaterial kann auch durch Hybridfäden, die neben Fasermaterial auch Bindermaterial enthalten, oder durch Beschichten oder Besprühen der Garne oder Rovings eingebracht werden. Das Bindermaterial kann auch nach dem Drapieren der Garne und Rovings über einem Formwerkzeug aufgebracht, zum Beispiel aufgesprüht werden.

Bevorzugt ist eine Trenneinrichtung, die die Garne oder Rovings zwischen einem Formwerkzeug und den Greifern trennen kann, und/oder eine Trenneinrichtung, die die Garne oder Rovings zwischen einem Formwerkzeug und den Garnübergabestellen trennen kann, vorgesehen.

Weiterhin kann eine Fixiereinrichtung vorgesehen sein, die geeignet ist, die Garne oder Rovings in einem Formwerkzeug oder um ein Formwerkzeug herum miteinander zu verbinden zu einem stabilen Faservorformling, insbesondere durch Anwendung von Druck- und/oder Temperaturerhöhung. Vorhandenes Bindermaterial wird durch die Fixiereinrichtung aktiviert und bindet ab. Die Fixiereinrichtung kann bevorzugt eine Heizeinrichtung und/oder eine Presseinrichtung sein, die mit einem der Formwerkzeuge verbunden oder in diese integriert sind. Zusätzlich kann auch bereits in der Nähe der Garnübergabestelle während des Herausziehens von Garnen oder Rovings eine gewisse Voraktivierung insbesondere durch Erwärmung stattfinden.

Besonders vorteilhaft vor allem für die Serienfertigung ist es, wenn ein Formwerkzeug mit einer ersten drapierten, bevorzugt auch fixierten, Lage aus Garnen oder Rovings an eine weitere erfindungsgemäße Vorrichtung nach einem der Ansprüche übergeben werden kann, in der eine weitere Lage aus Garnen oder Rovings aufgebracht werden kann und zwar mit einer anderen Faserrichtung bevorzugt um etwa 30°, 45°, 60° oder 90° gedreht. Durch das Hintereinanderreihen zweier oder mehrerer erfindungsgemäßer Vorrichtungen kann eine Fertigungsstraße zum Aufbringen verschiedener Faserlagen auf ein Formwerkzeug gebildet werden. Dazu ist es besonders vorteilhaft, wenn das Formwerkzeug einfach von der Bewegungseinrichtung in der jeweiligen Vorrichtung trennbar ist. Die Übergaberichtung von einer zur nächsten Vorrichtung ist bevorzugt in etwa senkrecht zu den Pfaden der Greifer. Bevorzugt wird das Formwerkzeug in der abgebenden Vorrichtung oder in der nachfolgenden Vorrichtung oder dazwischen gedreht, so dass die gewünschte Faserrichtung für die weitere Lage in der Projektion mit den Pfaden der Greifer der nachfolgenden Vorrichtung weitgehend übereinstimmt.

Die Aufgabe wird durch das Verfahren mit den Merkmalen entsprechend Anspruch 11, insbesondere in Verbindung mit einer Vorrichtung nach einem der Vorrichtungsansprüche, gelöst. Weitere vorteilhafte Merkmale für das Verfahren sind in den abhängigen Ansprüchen genannt.

Erfindungsgemäß zeichnet sich das Verfahren dadurch aus, mehrere Lagen von Garnen oder Rovings auf dem Formwerkzeug aufgebracht werden, wobei jede Lage für sich erst nebeneinender aufgespannt, dann drapiert und bevorzugt auch fixiert wird, bevor die nächste Lage in ähnlicher Weise aufgebracht wird, wobei das Formwerkzeug so gedreht wird, dass auf eine erste drapierte, bevorzugt auch fixierte, Lage aus Garnen oder Rovings eine weitere Lage aus Garnen oder Rovings mit einer anderen Faserrichtung, bevorzugt um etwa 30°, 45°, 60° oder 90° gedreht, aufgebracht wird.

Vorteilhaft ist es, wenn mehrere Greifer in einem Spannvorgang gleichzeitig und unabhängig voneinander bewegt werden können. Dadurch können die Garne oder Rovings schnell parallel aufgespannt werden und trotzdem kann jeder Greifer unabhängig arbeiten.

Bevorzugt ist, dass wenigstens ein Formwerkzeug zwischen die Greifer und die Garnübergabestellen gebracht wird, so dass die Garne oder Rovings über ein Formwerkzeug drapiert werden. Die Bewegung kann durch das oder die Formwerkzeuge erfolgen und/oder es werden Spulengatter und alle benutzten Greifer relativ zu einem Formwerkzeug bewegt.

Damit die Form möglichst gut abgebildet werden kann und wenig Verschnitt an teurem Fasermaterial anfällt, ist es von Vorteil, wenn die einzelnen Greifer so positioniert werden, dass sie einer Außenkontur eines Formwerkzeuges folgend die Anfänge der Garne oder Rovings festhalten.

In einem bevorzugten erfindungsgemäßen Verfahren werden alle Greifer beim Herstellen einer Lage nur einmal von der Abholposition zur gewünschten Zwischenposition bewegt und bleiben dort, bis die Lage fixiert und die Garne oder Rovings durchtrennt worden sind. Es ist keine aufwändige Hinundher-Bewegung notwendig.

Bevorzugt werden die Garne oder Rovings, während sie über einem Formwerkzeug drapiert sind, fixiert, insbesondere durch erhöhten Druck oder erhöhte Temperatur. Vorhandenes Bindermaterial wird dadurch aktiviert und verbindet die Garne oder Rovings so miteinander, dass der Faservorformling eine ausreichende Stabilität für die Weiterverarbeitung bekommt. Es kann auch schon während des Abspulens der Garne oder Rovings eine Voraktivierung von Bindermaterial, insbesondere durch Erwärmen, an oder in der Nähe der Garnübergabestelle erfolgen.

Mit mehreren Formwerkzeugen, die entsprechend der gewünschten Form passend gestaltet sind und zusammengefahren werden, kann eine genauere Formgebung auch bei komplexen dreidimensionalen Strukturen erreicht werden.

Insbesondere bei sehr stark dreidimensional gestalteten Bauteilen kann es hilfreich sein, die Spannung der Garne oder Rovings, während des Drapierens einzustellen oder zu regeln. Dadurch kann ein Reißen der Garne vermieden werden.

Nach dem Drapieren und nach oder während des Fixierens werden die Garne oder Rovings zwischen Formwerkzeug und Greifer und/oder zwischen Formwerkzeug und Garnübergabestelle durchtrennt. Es verbleibt nur sehr wenig Verschnitt an Fasermaterial an den Greifern. Das Fasermaterial zwischen Formwerkzeug und Garnübergabestellen kann durch Zurückspulen wieder aufgewickelt und weiterverwendet werden.

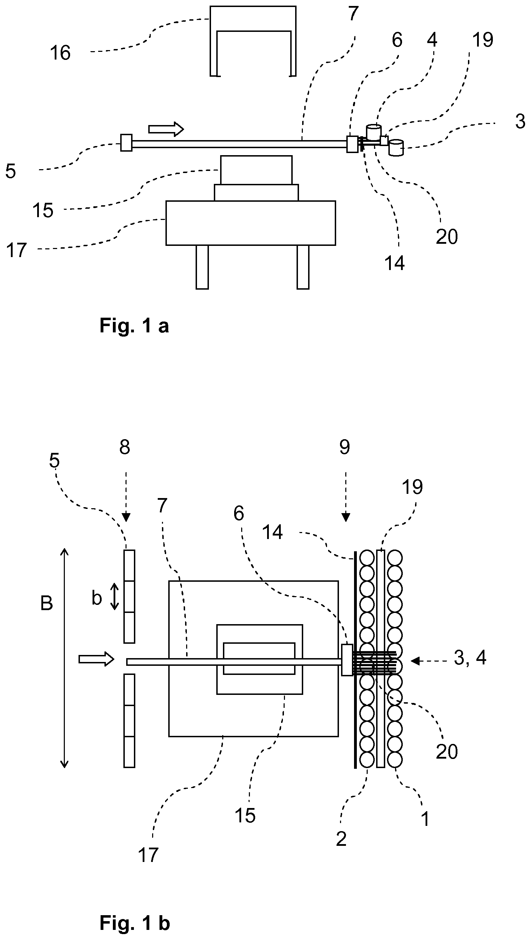

Anhand von Ausführungsbeispielen werden weitere vorteilhafte Merkmale der Erfindung erläutert unter Bezugnahme auf die Zeichnungen. Sie zeigen in den **Figuren 1 a - 7 b** eine bevorzugte Ausführungsform der erfindungsgemäßen Vorrichtung bei verschiedenen Verfahrensschritten:

> **Fig. 1a** Seitenansicht während Greifer Garne oder Rovings holt
>
> **Fig. 1b** Draufsicht während Greifer Garne oder Rovings holt
>
> **Fig. 2a** Seitenansicht nach Spannen der Garne oder Rovings
>
> **Fig. 2b** Draufsicht nach Spannen der Garne oder Rovings
>
> **Fig. 3a** Seitenansicht nach einem ersten Drapierschritt der ersten Lage
>
> **Fig. 3b** Draufsicht nach einem ersten Drapierschritt der ersten Lage
>
> **Fig. 4a** Seitenansicht nach einem zweiten Drapierschritt der ersten Lage
>
> **Fig. 4b** Draufsicht nach einem zweiten Drapierschritt der ersten Lage
>
> **Fig. 5a** Seitenansicht nach dem Abtrennen der Garne oder Rovings

> **Fig. 5b** Draufsicht nach dem Abtrennen der Garne oder Rovings
>
> **Fig. 6a** Seitenansicht nach Drehen der Formwerkzeuge und während Greifer Garne oder Rovings für die zweite Lage holen
>
> **Fig. 6b** Draufsicht nach Drehen der Formwerkzeuge und während Greifer Garne oder Rovings für die zweite Lage holen
>
> **Fig. 7a** Seitenansicht nach einem zweiten Drapierschritt der zweiten Lage
>
> **Fig. 7b** Draufsicht nach einem zweiten Drapierschritt der zweiten Lage
>
> und in den **Figuren 8 a - c** eine weitere bevorzugte Ausführungsform der erfindungsgemäßen Vorrichtung bei verschiedenen Verfahrensschritten:

> **Fig. 8a** Draufsicht nach Aufbringen der ersten Lage
>
> **Fig. 8b** Draufsicht nach Aufbringen einer weiteren Lage
>
> **Fig. 8c** Draufsicht nach Aufbringen noch einer weiteren Lage.

Nachfolgend werden die Figuren und die Ausführungsbeispiele detaillierter beschrieben.

In einer besonders bevorzugten Ausführungsform der Vorrichtung und des Verfahrens ist die Vorrichtung geeignet dazu bzw. werden von der Vorrichtung die folgenden Verfahrensschritte nacheinander oder teilweise parallel zueinander ausgeführt:

- Bereitstellen der Garne oder Rovings und eventuell des Bindermaterials
- Greifen der benötigten Garne oder Rovings und eventuell des Bindermaterials
- Spannen der benötigten Garne oder Rovings durch entsprechendes Positionieren der Greifer
- Erstes Drapieren über ein erstes Formwerkzeug
- Zweites Drapieren mit einem zweiten Formwerkzeug
- Fixieren der Lage aus Garnen oder Rovings
- Abtrennen der Garne oder Rovings auf beiden Seiten der Formwerkzeuge
- Rückspulen der ausgegebenen und nicht benötigten Garne oder Rovings
- Öffnen der Formwerkzeuge
- Drehen und/oder Weitergeben eines Formwerkzeuges mit der aufgebrachten Lage

Wiederholung des Ablaufes für das Aufbringen weiterer Lagen in derselben Vorrichtung oder in einer oder mehreren weiteren erfindungsgemäßen Vorrichtungen bis zur Fertigstellung des Faservorformlings.

Als Fasermaterial für die Garne oder Rovings können Fasern z.B. aus Kohlenstoff (Carbon), Glas, oder Aramid oder andere Fasern verwendet werden. Und als Matrixmaterial für den faserverstärkten Kunststoff kommen z.B. thermoplastischer oder duroplastischer Kunststoff, Epoxidharz, anderer Kunststoff (Polymere) oder anderes Harz in Frage. Als Bindermaterial kann thermoplastischer Kunststoff oder Klebstoff verwendet werden. Es kann entweder bereits als Hybridgarn oder Hybrid-Roving vorliegen, d.h. einzelne Fasern oder Garne sind aus Bindermaterial, oder es kann zusammen mit den Garnen oder Rovings vom Greifer mit aufgespannt werden oder es wird auf die drapierten Garne oder Rovings aufgebracht oder aufgesprüht.

In **Fig. 1a** und **1b** ist der grundsätzliche Aufbau der Vorrichtung zu sehen. Die Bereitstellung der Garne oder Rovings erfolgt über eine Vielzahl von Abwickelstationen, in denen das Fasermaterial in Form von Spulen oder Garnknäuel (sogenannte Bobbins) bereitgestellt wird, und die in mehreren Reihen 1,2 nebeneinander, hintereinander oder übereinander angeordnet sind. Die Spulen können auch, wie gezeigt in Fig.1a eine obere und eine untere Reihe bilden. Die Anfänge der Garne oder Rovings 20 sind nur im jeweils benutzten Bereich für die benutzten Abwickelstationen 3,4 schematisch dargestellt. Auch alle anderen Anfänge werden zu den entsprechenden Garnübergabestellen 14 eingefädelt, so dass sie von den zugehörigen Greifern in den Abholpositionen 9 erfasst werden können. So etwas bezeichnet man zusammen auch als Spulengatter.

Auf der anderen Seite sind die Greifer 5 in ihren Maximalpositionen 8, die in diesem Fall auch den Ausgangspositionen entsprechen, dargestellt. Die Klemmbreite eines Greifers ist b und die Gesamtklemmbreite aller Greifer ist B. Auch wenn nur gleichbreite Greifer dargestellt sind, so sind selbstverständlich auch Greifer mit unterschiedlichen Breiten möglich. Die Greifer müssen auch nicht unbedingt ihre Maximal- und Abholpositionen in einer Linie haben. Weiterhin sind ein erstes Formwerkzeug 15 auf einem Hubtisch 17 und ein zweites Formwerkzeug 16, das als Haube ausgeführt ist, in Abfahrposition also außerhalb der Pfade der Greifer dargestellt. Das zweite Formwerkzeug ist in der Draufsicht nicht dargestellt. Und eine entsprechende Bewegungs- oder Absenkeinrichtung für das zweite Formwerkzeug ist auch nicht extra dargestellt. Weiterhin gibt es einen Bindermaterialvorrat 19, der beispielsweise zwischen den Reihen der Abwickelstationen angeordnet sein kann.

Ein Greifer 6 befindet sich in Abholposition und holt die seiner Anordnung in der Vorrichtung entsprechenden Garne oder Rovings, indem er deren Anfänge greift. Der Greifer ist durch eine Führungsvorrichtung 7, z.B. ein Gestänge oder einen Kolben, verschiebbar. Die Greifer können sich einzeln, aber nur linear und auf parallelen Pfaden nebeneinander zwischen Abhol- und Maximalposition bewegen, dadurch ist eine einfach Automatisierung und eine schnelle parallele Bewegung möglich. Es können wie dargestellt mehrere Abwickelstationen zu einer Gruppe zusammengefasst und einem Greifer zugeordnet werden. Ein Greifer kann mehrere Garne oder Rovings zusammen greifen. Auf jeden Fall sollten mindestens so viele Abwickelstationen wie Greifer vorgesehen sein.

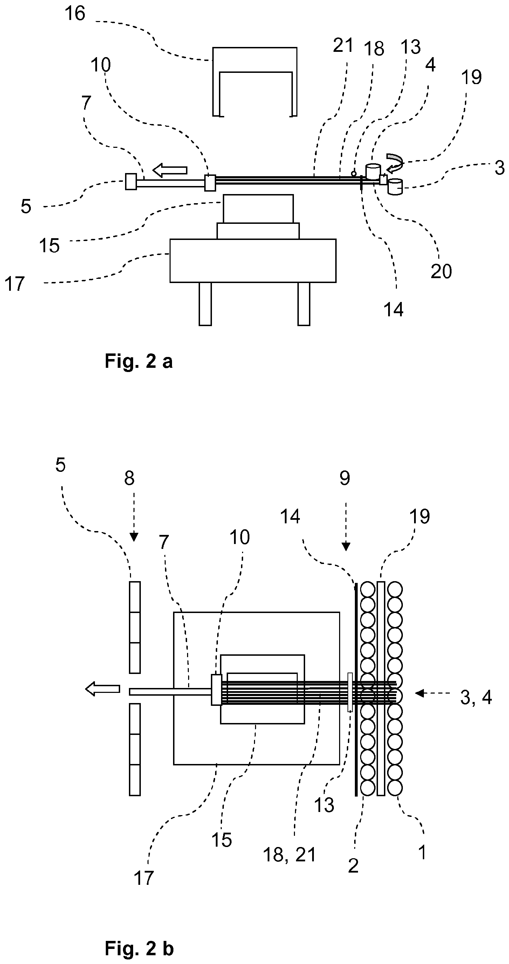

**Fig. 2 a** und **2 b** stellen die aufgespannten Garne oder Rovings 21 dar, die der Greifer 10 durch das Verfahren in seine Zwischenposition herausgezogen hat. Das kann durch ein aktiv angetriebenes Abwickeln unterstützt werden. Die Zwischenposition befindet sich nahe an der Außenkontur der Formwerkzeuge bzw. nahe der späteren Lage der Außenkontur, wenn die Formwerkzeuge in ihre Drapierposition gebracht sind. Zusammen mit den Garnen oder Rovings kann auch Bindermaterial 18, beispielsweise in Form von Binderfäden oder Bindervliesen, vom Greifer mit aufgespannt werden. Es kann auch wie dargestellt eine obere und eine untere Reihe von Abwickelstationen geben, so dass das Bindermaterial zwischen der oberen und der unteren Schar von Garnen oder Rovings aufgespannt wird. Beim Herausziehen kann das Bindermaterial im Bereich der Garnübergabestellen 14, insbesondere durch eine Heizeinrichtung, voraktiviert werden, so dass die Garne oder Rovings gleich beim Beginn des Drapierens schon etwas aneinander fixiert werden. Außerdem kann im Bereich der Garnübergabestellen eine Spreizeinrichtung vorgesehen sein, die als eine Art Kamm mit einer oder mehreren Reihen von Zinken ausgeführt sein kann. So wird gewährleistet, dass die Garne oder Rovings flächendeckend nebeneinander liegen und auch beim späteren Drapieren nicht seitlich verrutschen. Die Spreizeinrichtung kann auch entlang der Garnwege oder entlang der Greiferpfade verschiebbar sein. Dargestellt ist noch eine Möglichkeit für eine Garnspannungsmesseinrichtung 13.

Unter Drapieren wird das Umformen bzw. in Form bringen der Garne oder Rovings mithilfe eines Formwerkzeuges verstanden. Das Drapieren kann in einer oder in mehreren Stufen erfolgen, indem das oder die Formwerkzeuge gleichzeitig oder nacheinander in die Lage aus aufgespannten Garnen oder Rovings hineinbewegt werden. Während des Drapierens ist es von Vorteil die Garnspannungen zu regeln, insbesondere konstant zu halten. D.h. es wird soviel Garn oder Roving ausgegeben, wie für das Drapieren an der entsprechenden Stelle des Formwerkzeuges notwendig ist. Um das zu erreichen können Brems- und Kupplungseinrichtungen vorgesehen sein. Bevorzugt ist jeder Abwickelstation oder jeder Gruppe von Abwickelstationen eine entsprechende Regelung zugeordnet. Damit wird verhindert, dass die Garne oder Rovings überbelastet oder zu lose verlegt werden. Die Garnspannungen können auch durch geeignete Messeinrichtungen im Bereich der Garnübergabestellen und/oder zwischen den Abwickelstationen und den Garnübergabestellen gemessen werden. Bevorzugt liegt der Wert der Garnspannungen zwischen 1 und 50 N/m$^2$.

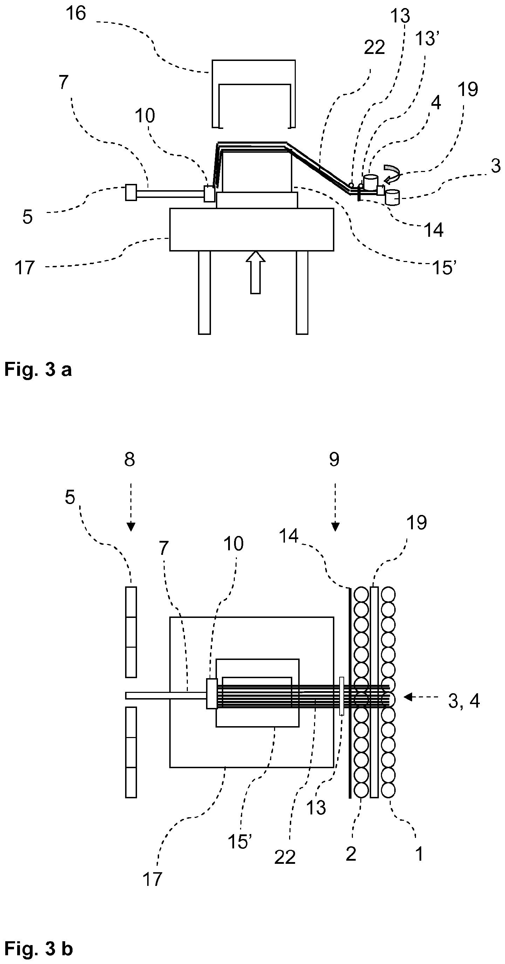

In den **Fig. 3 a** und **3 b** ist der Zustand nach dem ersten Drapieren dargestellt. Vom Hubtisch 17 wurde das erste Formwerkzeug 15' in die Drapierposition bewegt. Dadurch werden die Garne oder Rovings 22 ausgelenkt und über das Formwerkzeug 15' drapiert. Der Greifer 10 fixiert die Anfänge der Garne nahe der Außenkontur des Formwerkzeuges 15'. Nach diesem Schritt kann alternativ oder zusätzlich Bindermaterial auf die Garne oder Rovings aufgebracht oder aufgesprüht werden.

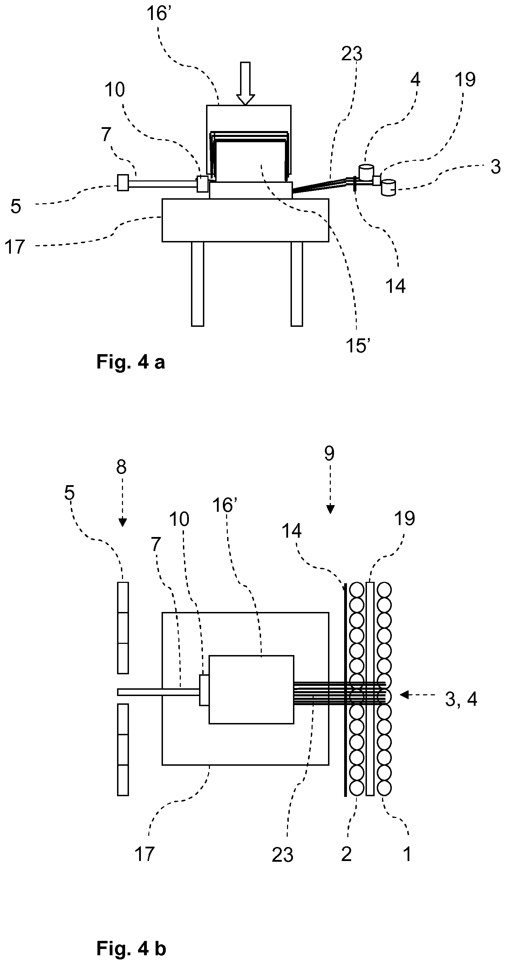

Im nächsten Schritt werden die Garne oder Rovings mithilfe des zweiten Formwerkzeuges 16', das in seine Drapierposition bewegt wurde, weiter drapiert bzw. umgeformt (**Fig. 4 a** und **4 b**). Durch das Zusammenwirken der beiden Formwerkzeuge, zwischen denen sich die Lage an Garnen oder Rovings befindet, ist eine genaue Formgebung möglich. Die Formwerkzeuge können auch zusammengepresst werden und eines, bevorzugt das zweite, oder beide Formwerkzeuge können beheizt sein, so dass das Bindermaterial aktiviert wird und die Garne oder Rovings formstabil zu einer Lage fixiert werden. Gleichzeitig mit oder nach dem Fixieren werden die Garne oder Rovings an beiden Seiten der Formwerkzeuge abgetrennt, also zwischen Greifer und Formwerkzeug und zwischen Garnübergabestellen und Formwerkzeug. In einer Ausführungsform kann die Trenneinrichtung mit dem ersten oder zweiten Formwerkzeug verbunden sein. Vorteilhaft ist es, wenn die Trennung zumindest auf der Seite der Garnübergabestellen nahe am Formwerkzeug erfolgt. Dadurch fällt wenig Verschnitt an teurem Fasermaterial an und es ist weniger Nachbearbeitung des Faservorformlings nötig.

Die abgetrennten Garne oder Rovings 23 können über eine Rückspuleinrichtung wieder zurückgezogen und aufgewickelt oder über entsprechende Garnführung zwischengespeichert werden. Das Rückspulen erfolgt so, dass wieder Anfänge der Garne oder Rovings im Bereich der Garnübergabestellen 14 so zu liegen kommen, dass sie von den Greifern abgeholt werden können, ohne dass allzu viel Verschnittmaterial anfällt. Zur Erfassung der Anfänge können Sensoren eingesetzt werden.

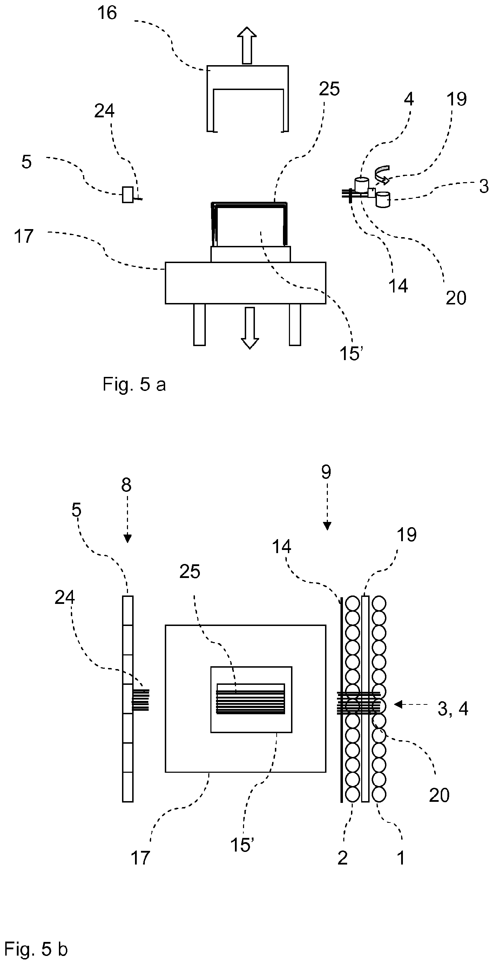

In **Fig. 5a** und **5 b** sind die Garne oder Rovings bereits zurückgespult oder an der Garnübergabestelle abgeschnitten worden, so dass sich wieder Anfänge an den Garnübergabestellen befinden. An den Greifern entsteht auch nur wenig Verschnitt 24 an Fasermaterial , da sie jeweils nahe und entlang der Außenkontur der Formwerkzeuge positioniert waren und nur soviel Garn aufgespannt haben, wie auch gebraucht wurde. Die Formwerkzeuge 15,16 werden wieder in ihre Abfahrposition gebracht. Auf dem ersten Formwerkzeug verbleibt die erste geformte Lage 25.

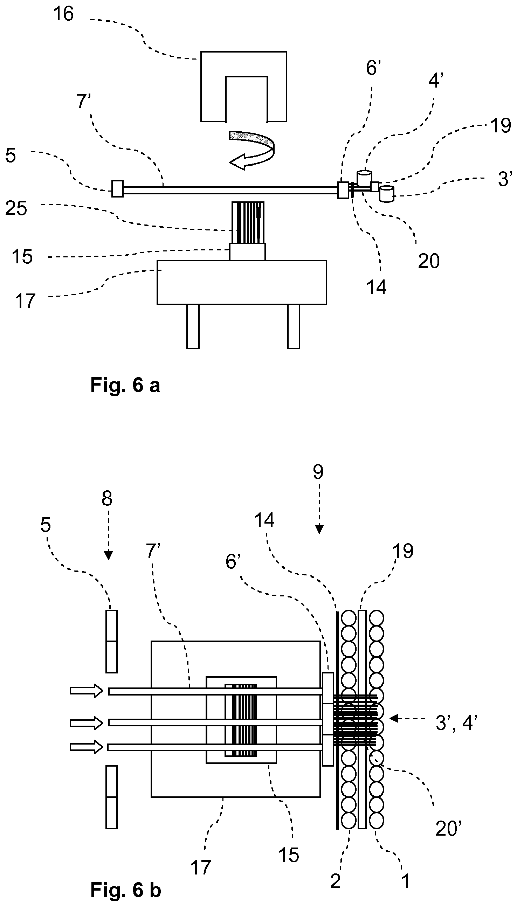

**Fig. 6 a** und **6 b** zeigen das erste und zweite Formwerkzeug 15,16 in gedrehter Lage. Hier wurden sie um 90° gedreht. Es ist aber auch ein anderer Drehwinkel beispielsweise etwa 30°, 45°, 60°, oder eine Kippung möglich. Bevorzugt liegt der Drehwinkel zwischen 10 und 170°. Das richtet sich danach, wie und mit welcher Faserorientierung die weitere Lage an Garnen oder Rovings aufgebracht werden soll. Die benötigten Greifer 6' sind in der Abholposition, um die Anfänge 20 der benutzten Garne oder Rovings zu greifen.

Dann werden die Garne oder Rovings der weiteren Lage aufgespannt bis zu einer Zwischenposition der Greifer und drapiert, indem das erste und das zweite Formwerkzeug 15', 16' in die Drapierposition gefahren werden.

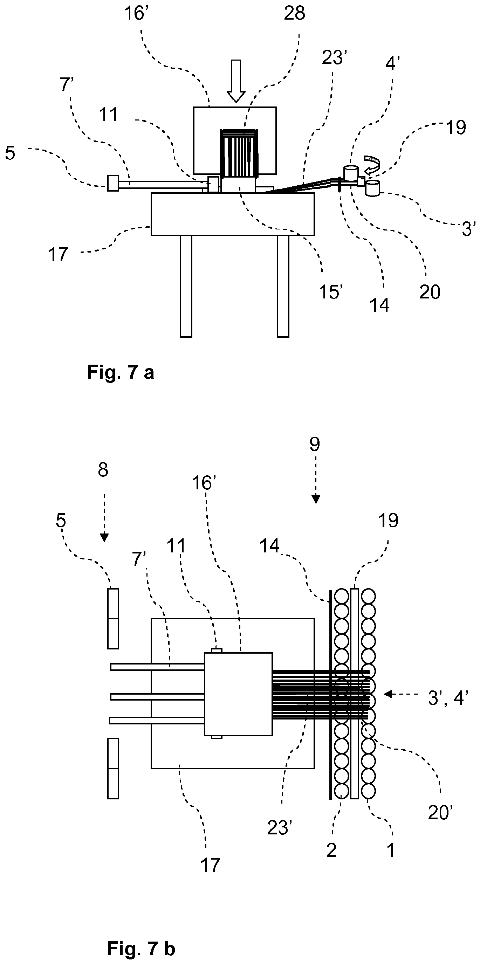

**Fig. 7 a** und **7 b** zeigen die Vorrichtung nachdem die Garne oder Rovings abgetrennt wurden. Die benutzen Greifer 11 stehen in einer Zwischenposition. Bei nicht rechteckigen Formwerkzeugen oder anderen Drehwinkeln können die Greifer 11 auch auf verschiedenen Zwischenpositionen stehen. Die weitere Lage aus Garnen oder Rovings und eventuell aus Bindermaterial kann ebenfalls durch Erwärmen und/oder Pressen formstabil fixiert und mit der ersten Lage verbunden werden. Zusammen bilden sie den Faservorformling 28.

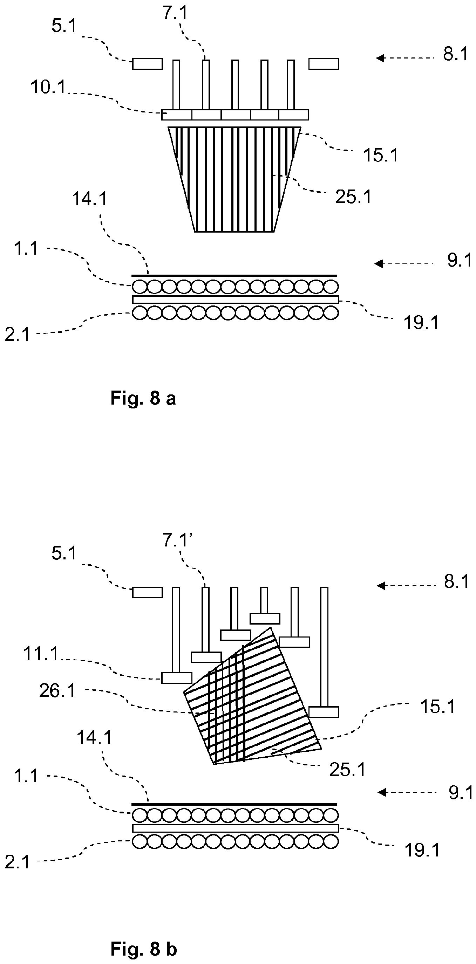

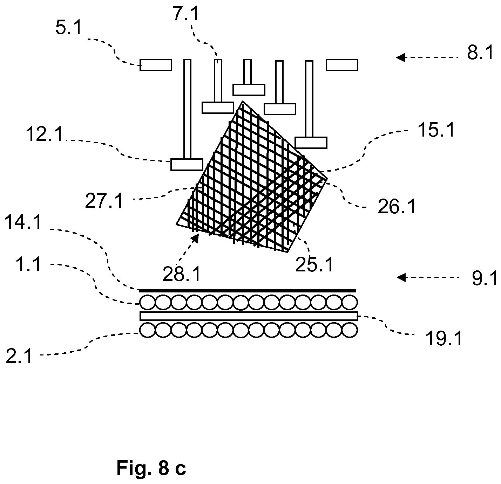

In **Fig. 8 a** ist eine weitere Ausführungsform dargestellt, wie sie zum Beispiel bei der Herstellung von Faservorformlingen für Motorhauben Verwendung finden kann. Die benutzten Greifer 10.1 stehen auf einer Zwischenposition, die nicht benötigten Greifer 5.1 sind in der Maximalposition 8.1. Auf dem ersten Formwerkzeug 15.1 ist eine erste Lage an Garnen oder Rovings drapiert und fixiert. Das zweite Formwerkzeug ist nicht dargestellt. Die Bevorratung der Garne oder Rovings erfolgt in den Abwickelstationen 1.1, 2.1. Weiterhin sind ein Bindermaterialvorrat 19.1 und die Garnübergabestellen 14.1 vorhanden.

Das Aufbringen einer oder mehrerer weiterer Lagen kann in derselben Vorrichtung erfolgen oder in einer oder mehreren weiteren erfindungsgemäßen Vorrichtungen, an die das erste Formwerkzeug zusammen mit der ersten Lage übergeben wird. In **Fig. 8b** ist eine weitere Lage 26.1 auf das gedrehte Formwerkzeug drapiert. Es sind der Übersicht halber nur ein paar Garne oder Rovings dargestellt. Die benutzten Greifer 11.1 stehen entlang der Außenkontur des Formwerkzeuges und bilden es möglichst genau ab. Für eine noch genauere Anpassung können schmälere oder auch unterschiedlich breite Greifer eingesetzt werden.

**Fig. 8c** zeigt wie noch eine weitere Lage aufgebracht wurde. Die benutzten Greifer 12.1 stehen wieder entlang der Außenkontur. Nach dem Fixieren bilden die Lagen zusammen den Faservorformling 28.1.

## Bezugszeichenliste

1, 1.1 ,2 , 2.1      Reihen von Abwickelstationen
3, 3', 4, 4'      Abwickelstationen in Benutzung
5, 5.1      Reihe von Greifern
6, 6'      Greifer in Abholposition
7, 7.1, 7', 7.1'      Führungsvorrichtung für Greifer
8, 8.1      Lage der Maximalpositionen
9, 9.1      Lage der Abholpositionen

10, 10.1, 11, 11.1, 12, 12.1 } Greifer in Zwischenpositio-

nen

13, 13' Messeinrichtung für Garn-Spannung

14, 14.1 Garnübergabestellen (gegebenenfalls auch mit Spreizeinrichtung und/oder mit Einrichtung zur Bindervoraktivierung)

15 erstes Formwerkzeug in Abfahrposition

15', 15.1 erstes Formwerkzeug in Drapierposition

16 zweites Formwerkzeug in Abfahrposition

16' zweites Formwerkzeug in Drapierposition

17 Hubtisch

18 Bindermaterial

19, 19.1 Bindermaterialvorrat

20, 20' Anfänge der Garne oder Rovings

21 gespannte Garne oder Rovings

22 drapierte Garne oder Rovings

23, 23' abgetrennte Garne oder Rovings

24 Verschnitt

25 erste Lage von Garnen oder Rovings

26.1, 27.1 weitere Lage von Garnen oder Rovings

28, 28.1 Faservorformling

b Klemmbreite eines Greifers

B Gesamtklemmbreite aller Greifer

**Patentansprüche**

1. Vorrichtung zur Herstellung von Faservorformlingen (28, 28.1), die insbesondere eine Vorstufe bei der Herstellung von faserverstärkten Kunststoff-Bauteilen darstellen, wobei die Vorrichtung mehrere Abwickelstationen (1, 1.1, 2, 2.1) für die Bereitstellung mehrerer Garne oder Rovings und mehrere Greifer (5, 5.1), die jeweils einzelne oder mehrere Garne oder Rovings an ihrem Anfang (20, 20') greifen können, aufweist, wobei jeder Greifer (5, 5.1) auf einem Pfad zwischen einer Maximalposition (8, 8.1) und einer Abholposition (9, 9.1) hin und her bewegbar ist, und wobei die Abholposition (9, 9.1) an einer Garnübergabestelle (14, 14.1) vorgesehen ist und näher an der Abwickelstation (1, 1.1, 2, 2.1) ist als die Maximalposition (8, 8.1), wobei jeder Greifer (5, 5.1) eine eigene Maximalposition (9, 9.1) hat und einer eigenen Garnübergabestelle (14, 14.1) zugeordnet ist und wobei die Greifer (5, 5.1) jeweils einzeln auf im Wesentlichen zueinander parallelen Pfaden bewegbar sind, **dadurch gekennzeichnet,** **dass** ein Formwerkzeug (15, 15',15.1, 16, 16') in der Vorrichtung so gedreht werden kann, dass auf eine erste drapierte, bevorzugt auch fixierte, Lage (25, 25.1) aus Garnen oder Rovings eine weitere Lage (26.1, 27.1) aus Garnen oder Rovings aufgebracht werden kann und zwar mit einer anderen Faserrichtung, bevorzugt um etwa 30°, 45°, 60° oder 90° gedreht.

2. Vorrichtung nach Anspruch 1 **dadurch gekennzeichnet,**

**dass** die Greifer (5, 5.1) verschiedene individuelle Zwischenpositionen (10, 10.1, 11, 11.1, 12, 12.1) auf ihrem Pfad einnehmen können und dass sie die jeweiligen Anfänge (20) der Garne oder Rovings an diesen Zwischenpositionen (10, 10.1, 11, 11.1, 12, 12.1) festhalten können.

3. Vorrichtung nach einem der vorherigen Ansprüche **dadurch gekennzeichnet,** **dass** die einzelnen Greifer (5, 5.1) jeweils auf einem im Wesentlichen linearen Pfad von der Abholposition (9, 9.1) zur Maximalposition (8, 8.1) bewegt werden können.

4. Vorrichtung nach einem der vorherigen Ansprüche **dadurch gekennzeichnet,** **dass** sie wenigstens ein Formwerkzeug (15, 15', 15.1, 16, 16') aufweist, das zwischen die Garnübergabestellen und zumindest einige der Greifer gebracht werden kann, insbesondere so, dass dadurch die Garne oder Rovings über das Formwerkzeug (15, 15', 15.1, 16, 16') drapiert werden.

5. Vorrichtung nach einem der vorherigen Ansprüche **dadurch gekennzeichnet,** **dass** die einzelnen Greifer (5, 5.1) einer Außenkontur eines Formwerkzeuges (15, 15', 15.1, 16, 16') folgend auf ihrem Pfad positioniert werden können.

6. Vorrichtung nach einem der vorherigen Ansprüche **dadurch gekennzeichnet,** **dass** mindestens 5 Greifer (5, 5.1), bevorzugt mindestens 10 Greifer (5, 5.1), besonders bevorzugt mindestens 20 Greifer (5, 5.1) vorhanden sind.

7. Vorrichtung nach einem der vorherigen Ansprüche **dadurch gekennzeichnet,** **dass** die Greifer (5, 5.1) an den Garnübergabestellen (14, 14.1) zusammen mit den Garnen oder Rovings auch Bindermaterial (18), insbesondere Fäden oder Vliese aus oder mit Thermoplast oder Klebstoff, greifen können.

8. Vorrichtung nach einem der vorherigen Ansprüche **dadurch gekennzeichnet,** **dass** eine Trenneinrichtung, die die Garne oder Rovings zwischen einem Formwerkzeug (15, 15',15.1, 16, 16') und den Greifern trennen kann, und/oder eine Trenneinrichtung, die die Garne oder Rovings zwischen einem Formwerkzeug (15, 15',15.1, 16, 16') und den Garnübergabestellen (14, 14.1) trennen kann, vorgesehen ist.

9. Vorrichtung nach einem der vorherigen Ansprüche **dadurch gekennzeichnet,** **dass** eine Fixiereinrichtung vorgesehen ist, die geeignet ist, die Garne oder Rovings in einem Formwerkzeug (15, 15',15.1, 16, 16') oder um ein Formwerkzeug (15, 15',15.1, 16, 16') herum formstabil zu verbinden, insbesondere ist die Fixiereinrichtung als Heizeinrichtung und/oder Presseinrichtung ausgeführt.

10. Vorrichtung nach einem der vorherigen Ansprüche **dadurch gekennzeichnet,**
**dass** ein Formwerkzeug (15, 15',15.1, 16, 16') mit einer ersten drapierten, bevorzugt auch fixierten, Lage (25, 25.1) aus Garnen oder Rovings an eine weitere Vorrichtung nach einem der vorherigen Ansprüche übergeben werden kann, in der eine weitere Lage (26.1, 27.1) aus Garnen oder Rovings aufgebracht werden kann und zwar mit einer anderen Faserrichtung bevorzugt um etwa 30°, 45°, 60° oder 90° gedreht.

11. Verfahren zur Herstellung von Faservorformlingen (28, 28.1), die beispielsweise eine Vorstufe bei der Herstellung von faserverstärkten Kunststoff-Bauteilen darstellen, insbesondere unter Verwendung einer Vorrichtung nach einem der vorherigen Ansprüche, welches folgende Verfahrensschritte aufweist:

- Spannen von Garnen oder Rovings (21)
- Drapieren der Garne oder Rovings (22) über ein Formwerkzeug (15, 15',15.1, 16, 16')
- Fixieren der drapierten Garne oder Rovings zu einem Faservorformling (28, 28.1), wobei mehrere separate Greifer (5, 5.1) an mehreren jeweils den einzelnen Greifern (5, 5.1) zugeordneten Garnübergabestellen (14, 14.1) einzelne oder mehrerer Garne oder Rovings (20, 20') greifen, und die Greifer (5, 5.1) dann zueinander auf im Wesentlichen parallelen Pfaden bewegt werden und die Garne oder Rovings (21) dadurch nebeneinander aufgespannt werden **dadurch gekennzeichnet,**
**dass** mehrere Lagen von Garnen oder Rovings auf dem Formwerkzeug (15, 15',15.1, 16, 16') aufgebracht werden, wobei jede Lage für sich erst nebeneinender aufgespannt, dann drapiert und bevorzugt auch fixiert wird, bevor die nächste Lage in ähnlicher Weise aufgebracht wird, wobei das Formwerkzeug (15, 15',15.1, 16, 16') so gedreht wird, dass auf eine erste drapierte, bevorzugt auch fixierte, Lage (25, 25.1) aus Garnen oder Rovings eine weitere Lage (26.1, 27.1) aus Garnen oder Rovings mit einer anderen Faserrichtung, bevorzugt um etwa 30°, 45°, 60° oder 90° gedreht, aufgebracht wird.

12. Verfahren nach Anspruch 11
**dadurch gekennzeichnet,**
**dass** mehrere Greifer (10, 10.1, 11, 11.1, 12, 12.1) in einem Spannvorgang gleichzeitig und unabhängig voneinander bewegt werden.

13. Verfahren nach Anspruch 11 oder 12
**dadurch gekennzeichnet,**
**dass** wenigstens ein Formwerkzeug (15, 15',15.1, 16, 16') zwischen die Greifer (10, 10.1, 11, 11.1, 12, 12.1) und die Garnübergabestellen (14, 14.1) gebracht wird, so dass die Garne oder Rovings (23) über ein Formwerkzeug drapiert werden.

14. Verfahren nach einem der Ansprüche 11 bis 13
**dadurch gekennzeichnet,**
**dass** die einzelnen Greifer (10, 10.1, 11, 11.1, 12, 12.1) so positioniert werden, dass sie einer Außenkontur eines Formwerkzeuges (15, 15',15.1, 16, 16') folgend die Anfänge der Garne oder Rovings festhalten.

**Claims**

1. Apparatus for producing fibre preforms (28, 28.1) which represent, in particular, a preliminary stage during the production of fibre-reinforced plastic components, the apparatus having a plurality of unwinding stations (1, 1.1, 2, 2.1) for the provision of a plurality of yarns or rovings and a plurality of grippers (5, 5.1) which can in each case grip individual yarns or rovings or a plurality of yarns or rovings at their start (20, 20'), it being possible for each gripper (5, 5.1) to be moved to and fro on a path between a maximum position (8, 8.1) and a pick-up position (9, 9.1), and the pick-up position (9, 9.1) being provided at a yarn transfer point (14, 14.1) and being closer to the unwinding station (1, 1.1, 2, 2.1) than the maximum position (8, 8.1), each gripper (5, 5.1) having a dedicated maximum position (9, 9.1) and being assigned to a dedicated yarn transfer point (14, 14.1), and it being possible for the grippers (5, 5.1) to be moved in each case individually on paths which are substantially parallel to one another, **characterized in that** a mould (15, 15', 15.1, 16, 16') can be turned in the apparatus in such a way that a further layer (26.1, 27.1) comprising yarns or rovings can be applied, to be precise with a different fibre direction, preferably turned by approximately 30°, 45°, 60° or 90°, to a first draped, preferably also fixed, layer (25, 25.1) comprising yarns or rovings.

2. Apparatus according to Claim 1, **characterized in that** the grippers (5, 5.1) can assume different individual intermediate positions (10, 10.1, 11, 11.1, 12, 12.1) on their path, and **in that** they can hold the respective starts (20) of the yarns or rovings firmly at the said intermediate positions (10, 10.1, 11, 11.1, 12, 12.1).

3. Apparatus according to either of the preceding claims, **characterized in that** the individual grippers (5, 5.1) can be moved in each case on a substantially linear path from the pick-up position (9, 9.1) to the maximum position (8, 8.1).

4. Apparatus according to one of the preceding claims, **characterized in that** it has at least one mould (15, 15', 15.1, 16, 16') which can be moved to between the yarn transfer points and at least some of the grippers, in particular in such a way that the yarns or rovings are draped over the mould (15, 15', 15.1, 16, 16') as a result.

5. Apparatus according to one of the preceding claims, **characterized in that** the individual grippers (5, 5.1) can be positioned on their path so as to follow an external contour of a mould (15, 15', 15.1, 16, 16').

6. Apparatus according to one of the preceding claims, **characterized in that** there are at least five grippers (5, 5.1), preferably at least ten grippers (5, 5.1), particularly preferably at least twenty grippers (5, 5.1).

7. Apparatus according to one of the preceding claims, **characterized in that** the grippers (5, 5.1) can also grip binder material (18), in particular threads or nonwovens made from or comprising thermoplastic or adhesive, together with the yarns or rovings, at the yarn transfer points (14, 14.1).

8. Apparatus according to one of the preceding claims, **characterized in that** a separating device which can separate the yarns or rovings between a mould (15, 15', 15.1, 16, 16') and the grippers and/or a separating device which can separate the yarns or rovings between a mould (15, 15', 15.1, 16, 16') and the yarn transfer points (14, 14.1) are/is provided.

9. Apparatus according to one of the preceding claims, **characterized in that** a fixing device is provided which is suitable for connecting the yarns or rovings in a mould (15, 15', 15.1, 16, 16') or around a mould (15, 15', 15.1, 16, 16') in a dimensionally stable manner; in particular, the fixing device is configured as a heating device and/or pressing device.

10. Apparatus according to one of the preceding claims, **characterized in that** a mould (15, 15', 15.1, 16, 16') with a first draped, preferably also fixed, layer (25, 25.1) comprising yarns or rovings can be transferred to a further apparatus according to one of the preceding claims, in which further apparatus a further layer (26.1, 27.1) comprising yarns or rovings can be applied, to be precise with a different fibre direction turned preferably by approximately 30°, 45°, 60° or 90°.

11. Method for producing fibre preforms (28, 28.1) which represent, for example, a preliminary stage during the production of fibre-reinforced plastic components, in particular with the use of an apparatus according to one of the preceding claims, which method has the following method steps:

- tensioning of yarns or rovings (21),
- draping of the yarns or rovings (22) over a mould (15, 15', 15.1, 16, 16'),
- fixing of the draped yarns or rovings to form a fibre preform (28, 28.1), a plurality of separate grippers (5, 5.1) gripping individual yarns or rovings or a plurality of yarns or rovings (20, 20') at a plurality of yarn transfer points (14, 14.1) which are assigned in each case to the individual grippers (5, 5.1), and the grippers (5, 5.1) then being moved with respect to one another on substantially parallel paths, and the yarns or rovings (21) being stretched next to one another as a result, **characterized in that** a plurality of layers of yarns or rovings are applied on the mould (15, 15', 15.1, 16, 16'), each layer separately being first of all stretched next to one another, then being draped and preferably also being fixed, before the next layer is applied in a similar way, the mould (15, 15', 15.1, 16, 16') being turned in such a way that a further layer (26.1, 27.1) comprising yarns or rovings with a different fibre direction, preferably turned by approximately 30°, 45°, 60° or 90°, is applied to a first draped, preferably also fixed, layer (25, 25.1) comprising yarns or rovings.

12. Method according to Claim 11, **characterized in that** a plurality of grippers (10, 10.1, 11, 11.1, 12, 12.1) are moved at the same time and independently of one another in a tensioning operation.

13. Method according to Claim 11 or 12, **characterized in that** at least one mould (15, 15', 15.1, 16, 16') is moved to between the grippers (10, 10.1, 11, 11.1, 12, 12.1) and the yarn transfer points (14, 14.1), with the result that the yarns or rovings (23) are draped over a mould.

14. Method according to one of Claims 11 to 13, **characterized in that** the individual grippers (10, 10.1, 11, 11.1, 12, 12.1) are positioned in such a way that they hold the starts of the yarns or rovings firmly in a manner which follows an external contour of a mould (15, 15', 15.1, 16, 16').

**Revendications**

1. Dispositif de fabrication de préformes en fibres (28, 28.1), qui représentent en particulier une ébauche lors de la fabrication de composants en matière synthétique renforcée par des fibres, dans lequel le dispositif présente plusieurs stations de déroulement (1, 1.1, 2, 2.1) pour la fourniture de plusieurs fils ou mèches et plusieurs pinces (5, 5.1), qui peuvent respectivement saisir des fils ou des mèches individuels ou multiples à leur commencement (20, 20'), dans lequel chaque pince (5, 5.1) est déplaçable en alternance sur un chemin entre une position maximale (8, 8.1) et une position de prélèvement (9, 9.1), et dans lequel la position de prélèvement (9, 9.1) est prévue en un point de transfert de fil (14, 14.1) et est plus proche de la station de déroulement (1, 1.1, 2, 2.1) que la position maximale (8, 8.1), dans lequel chaque pince (5, 5.1) a une position maximale particulière (9, 9.1) et est associée à un point particulier de transfert de fil (14, 14.1) et dans lequel les pinces (5, 5.1) sont chacun mobiles individuellement sur des chemins essentiellement parallèles l'un à l'autre, **caractérisé en ce qu'**un outil de moulage (15, 15', 15.1, 16, 16') peut tourner dans le dispositif de telle manière qu'une autre couche de fils ou de mèches puisse être déposée sur une première couche drapée, de préférence aussi fixée, (25, 25.1) de fils ou de mèches, notamment avec une autre direction des fibres, de préférence tournée d'environ 30°, 45°, 60° ou 90°.

2. Dispositif selon la revendication 1, **caractérisé en ce que** les pinces (5, 5.1) peuvent occuper différentes positions intermédiaires individuelles (10, 10.1, 11, 11.1, 12, 12.1) sur leur chemin et **en ce qu'**elles peuvent maintenir les commencements respectifs des fils ou des mèches dans ces positions intermédiaires (10, 10.1, 11, 11.1, 12, 12.1).

3. Dispositif selon l'une quelconque des revendications précédentes, **caractérisé en ce que** les pinces individuelles (5, 5.1) peuvent être déplacées respectivement sur un chemin essentiellement linéaire de la position de prélèvement (9, 9.1) à la position maximale (8, 8.1).

4. Dispositif selon l'une quelconque des revendications précédentes, **caractérisé en ce qu'**il présente au moins un outil de moulage (15, 15', 15.1, 16, 16'), qui peut être placé entre les points de transfert de fil et au moins certaines des pinces, en particulier de telle manière que les fils ou les mèches soient ainsi drapés sur l'outil de moulage (15, 15', 15.1, 16, 16').

5. Dispositif selon l'une quelconque des revendications précédentes, **caractérisé en ce que** les pinces individuelles (5, 5.1) peuvent être positionnées sur leur chemin en suivant un contour extérieur d'un outil de moulage (15, 15', 15.1, 16, 16').

6. Dispositif selon l'une quelconque des revendications précédentes, **caractérisé en ce qu'**il se trouve au moins 5 pinces (5, 5.1), de préférence au moins 10 pinces (5, 5.1), et de préférence encore au moins 20 pinces (5, 5.1).

7. Dispositif selon l'une quelconque des revendications précédentes, **caractérisé en ce que** les pinces (5, 5.1) peuvent également saisir aux points de transfert de fil (14, 14.1) en même temps que les fils ou les mèches, une matière liante (18), en particulier des fils ou des non-tissés en ou avec un thermoplastique ou une colle.

8. Dispositif selon l'une quelconque des revendications précédentes, **caractérisé en ce qu'**il est prévu un dispositif de découpage, qui peut découper les fils ou les mèches entre un outil de moulage (15, 15', 15.1, 16, 16') et les pinces, et/ou un dispositif de découpage, qui peut découper les fils ou les mèches entre un outil de moulage (15, 15', 15.1, 16, 16') et les points de transfert de fil (14, 14.1).

9. Dispositif selon l'une quelconque des revendications précédentes, **caractérisé en ce qu'**il est prévu un dispositif de fixation, qui est approprié pour assembler les fils ou les mèches sous forme stable dans un outil de moulage (15, 15', 15.1, 16, 16') ou autour d'un outil de moulage (15, 15', 15.1, 16, 16'), en particulier le dispositif de fixation est constitué par un dispositif de chauffage et/ou un dispositif de pressage.

10. Dispositif selon l'une quelconque des revendications précédentes, **caractérisé en ce qu'**un outil de moulage (15, 15', 15.1, 16, 16') avec une première couche drapée, de préférence aussi fixée, (25, 25.1) de fils ou de mèches peut être transmis à un autre dispositif selon l'une quelconque des revendications précédentes, dans lequel une autre couche (26.1, 27.1) de fils ou de mèches peut être déposée, notamment avec une autre direction des fibres, de préférence tournée d'environ 30°, 45°, 60° ou 90°.

11. Procédé de fabrication de préformes en fibres (28, 28.1), qui représentent par exemple une ébauche lors de la fabrication de composants en matière synthétique renforcée par des fibres, en particulier en utilisant un dispositif selon l'une quelconque des revendications précédentes, qui présente les opérations suivantes:

   - tendre des fils ou des mèches (21),
   - draper les fils ou les mèches (22) sur l'outil de moulage (15, 15', 15.1, 16, 16'),
   - fixer les fils ou les mèches drapés en une ébauche en fibres (28, 28.1), dans lequel plusieurs pinces séparées (5, 5.1) saisissent des fils ou des mèches individuels ou multiples (20, 20') en plusieurs points de transfert de fil (14, 14.1) respectivement associés aux pinces individuelles (5, 5.1), et on déplace alors les pinces (5, 5.1) l'une par rapport à l'autre sur des chemins essentiellement parallèles et on tend ainsi les fils ou les mèches (21) les uns à côté des autres, **caractérisé en ce que** l'on dépose plusieurs couches de fils ou de mèches sur l'outil de moulage (15, 15', 15.1, 16, 16'), dans lequel chaque couche est d'abord tendue côte à côte, puis drapée et de préférence également fixée, avant que la couche suivante soit déposée de façon similaire, dans lequel on fait tourner l'outil de moulage (15, 15', 15.1, 16, 16') de telle manière qu'une autre couche de fils ou de mèches (26.1, 27.1) soit déposée sur une première couche drapée, de préférence aussi fixée, (25, 25.1) de fils ou de mèches, avec une autre direction des fibres, de préférence tournée d'environ 30°, 45°, 60° ou 90°.

12. Procédé selon la revendication 11, **caractérisé en ce que** l'on déplace plusieurs pinces (10, 10.1, 11, 11.1, 12, 12.1) en même temps et indépendamment l'une de l'autre dans une opération de mise en tension.

13. Procédé selon la revendication 11 ou 12, **caractérisé en ce que** l'on place au moins un outil de moulage (15, 15', 15.1, 16, 16') entre les pinces (10, 10.1, 11, 11.1, 12, 12.1) et les points de transfert de fil (14, 14.1), de telle manière que les fils ou les mèches (23) soient drapés sur un outil de moulage.

14. Procédé selon l'une quelconque des revendications 11 à 13, **caractérisé en ce que** l'on positionne les pinces individuelles (10, 10.1, 11, 11.1, 12, 12.1) de telle manière qu'elles maintiennent les commencements des fils ou des mèches en suivant un contour extérieur d'un outil de moulage (15, 15', 15.1, 16, 16').

**Fig. 1 a**

**Fig. 1 b**

**Fig. 2 a**

**Fig. 2 b**

**Fig. 3 a**

**Fig. 3 b**

**Fig. 4 a**

**Fig. 4 b**

Fig. 5 a

Fig. 5 b

Fig. 6 a

Fig. 6 b

**Fig. 7 a**

**Fig. 7 b**

**Fig. 8 a**

**Fig. 8 b**

**Fig. 8 c**

**IN DER BESCHREIBUNG AUFGEFÜHRTE DOKUMENTE**

**In der Beschreibung aufgeführte Patentdokumente**

- DE 102008011658 A1
- DE 102008042574 A1
- US 20080202691 A1
- DE 102009042384